# EUROPEAN PATENT SPECIFICATION

(11) **EP 1 532 025 B1**
(45) Date of publication and mention of the grant of the patent: **28.06.2006**
(21) Application number: 03738810.5
(22) Date of filing: 04.06.2003
(51) Int. Cl.: B60R 22/195

(54) **A PRE-TENSIONER**
VORSPANNVORRICHTUNG
PRETENSIONNEUR

(30) Priority: 06.06.2002 GB 0212992
(43) Date of publication of application: 25.05.2005
(73) Proprietor: AUTOLIV DEVELOPMENT AB, 447 83 Vargarda (SE)
(72) Inventor: ARNAUD, Denis, F-78440 Lainville-en-Vexin (FR)
(74) Representative: Parry, Simon James
(86) International application number: PCT/SE2003/000911
(87) International publication number: WO 2003/104048

(56) References cited:
- US-A- 4 237 690
- US-A- 4 458 921
- US-A- 4 573 322
- US-A- 5 495 790

## Description

**THE PRESENT INVENTION** relates to a pre-tensioner, and more particularly relates to a pre-tensioner adapted to pre-tension a safety-belt arrangement provided in a motor vehicle.

It is known that it is desirable to provide a pre-tensioner to pre-tension a safety-belt provided in a motor vehicle. The function of the pre-tensioner is to apply a tension to part of the safety-belt as soon as an accident is detected. Thus the safety-belt may become fully tight around the occupant of a seat before the accident has developed to such a stage that the occupant begins to move forwardly relative to the seat. Thus, all of the "slack" that might initially have been present in the seat-belt is removed, meaning that, as the occupant moves forwardly, the seat-belt immediately begins to restrain the occupant. The occupant will move forward slightly, as the seat-belt stretches, but the risk of the occupant moving forwardly by a sufficient distance to impact with a fixed part of the vehicle, such as the steering wheel or dash board, is minimised.

It has been proposed previously to provide a pre-tensioner in which a cylinder is provided, there being a piston within the cylinder which is connected to part of the safety-belt. A source of gas is provided, so that gas may be injected into the cylinder to move the piston, thereby applying tension to part of the safety-belt when an accident is detected.

It has been proposed to provide such a pre-tensioner with an energy-absorbing function. US-4,458,921 discloses a pre-tensioner according to the preamble of claim 1, wherein a deformable bar is provided, which is directly attached to the part of the safety-belt which is to be tensioned, the deformable bar passing through a relatively narrow passage provided in the piston and terminating in a coiled section. If a force in excess of a predetermined threshold is applied, the deformable bar will un-coil and will pass through the passage provided in the piston, thus effectively paying-out a small portion of safety-belt, but simultaneously absorbing a substantial amount of energy.

A problem that exists with existing pre-tensioners is that if the pre-tensioner is fired when there is a very substantial amount of initial slack in the safety-belt, the piston of the pre-tensioner may emerge from one end of the cylinder and may cause injuries to occupants of the vehicle, and also, due to the action of the piston, the safety-belt buckle may become released. It is thus desirable to provide an arrangement in which, should there be excessive slack in the seat-belt, the energy imparted to the piston by the gas can be dissipated without any risk of injury.

The present invention seeks to provide an improved pre-tensioner.

According to the present invention, there is provided a pre-tensioner for applying tension to part of a safety-belt in the event that an accident should occur, the pre-tensioner comprising: a tube or cylinder defining a cavity; a gas supply arrangement to supply gas to the cavity; a piston moveable within the cavity upon supply of gas to the cavity, the piston defining a passage therethrough; there being a deformable rod or bar extending through said passage and having a portion thereof coiled into a plurality of spaced apart turns, one end of the rod or bar being connectable to part of a safety-belt arrangement; the turns of the deformable rod or bar extending beyond the end face of the piston to engage an end part of the cylinder so that the turns become compressed should the piston move sufficiently towards the end part of the cylinder.

Preferably, a substantially cylindrical cavity is defined within the piston adjacent the end face, the cavity being dimensioned to accommodate the terms of the rod or bar, when fully compressed.

Advantageously, the end part of the cylinder is deformable and may be deformed, whilst absorbing energy, when contacted by the piston.

Conveniently, a wire or cable is provided to connect the rod or bar to said part of a safety-belt arrangement, one end of the wire or cable being connected to one end of said rod or bar within the cavity, the wire or cable extending from the cylinder.

In order that the invention may be more readily understood, and so that further features thereof may be appreciated, the invention will now be described, by way of example, with reference to the accompanying drawings in which:
FIGURE 1 is a diagrammatic sectional view of a pre-tensioner in accordance with the invention prior to actuation, and

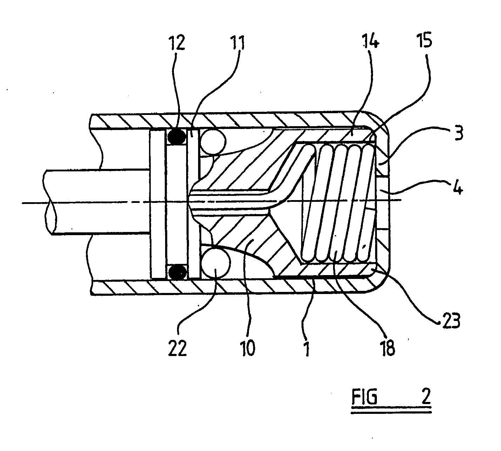

FIGURE 2 is a view corresponding to part of Figure 1 illustrating the pre-tensioner after actuation thereof.

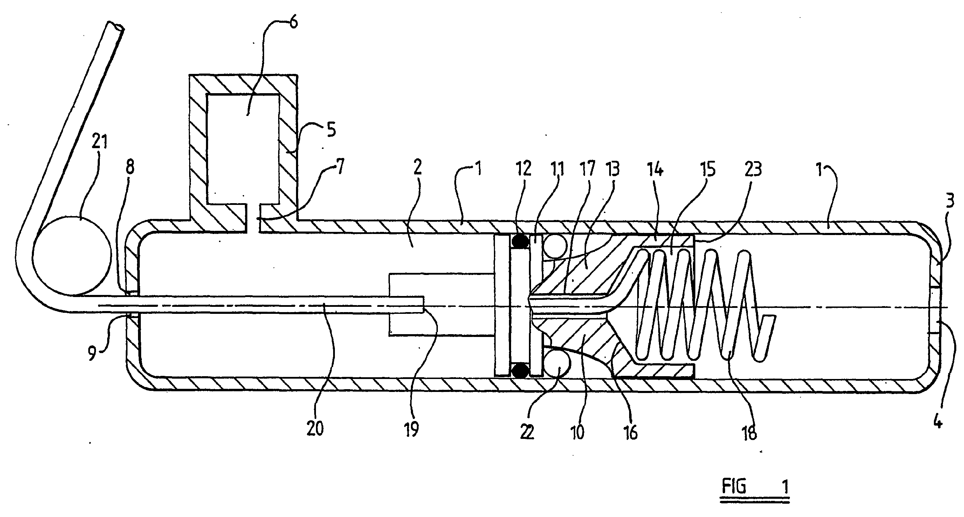

Referring initially to Figure 1 of the accompanying drawings, a pre-tensioner comprises a tube or cylinder 1 defining a cylindrical cavity 2. One end of the cavity 2 is substantially closed by an inwardly turned lip 3, which defines central circular aperture 4 at the end of the cylinder 1.

Mounted on the cylinder 1 is a housing 5 which contains a pyrotechnic charge 6 associated with an igniter adapted to receive a firing signal from a crash sensor in a manner known *per se.* The housing 5 communicates with the cavity 2 of the cylinder 1 by means of a passage 7. The end of the cylinder 1 substantially adjacent the housing 5 defines an outlet port 8 which may be provided with a seal 9.

Contained within the cavity 2 of the cylinder 1 is a piston 10. The piston 10 comprises an outwardly extending flange 11 provided with a peripheral groove which contains a seal 12. The flange 11 is a close sliding fit within the cavity 2 of the cylinder 1, and the seal ensures a gas-tight fit between the piston 10 and the cylinder 1.

Immediately adjacent the flange 11, the piston 10 has an outwardly diverging tapering body portion 13, the narrow end of which is connected to the flange 11. The tapering body portion 13 terminates with a cylindrical section 14 having an outer diameter substantially equal to that of the flange 11. The interior of the cylindrical section 14 is hollowed out to form a substantially cylindrical cavity 15, that cavity having a tapering end region 16 which tapers down to a passage 17 extending through the tapering body portion 13 of the piston 10, and through the flange 11.

A deformable rod or bar 18 is provided, the rod or bar 18 extending through the passage 17, and emerging into the hollowed out cavity 15 in which the rod or bar is coiled into a plurality of spaced-apart helical turns. The coiled section of the rod or bar 18 is configured to extend away from the tapering region 16 of the cavity, to project out of the cavity 15 and extend beyond the end face 23 of the piston 10. Thus, in the initial configuration of the arrangement, as shown in Figure 1, the terminal turns of the rod or bar 18 are located beyond the end face 23 of the piston 10.

The end of the rod or bar 18 opposite from the coiled region, is connected, by means of a connector 19, to a wire or cable 20. The wire or cable 20 extends axially of the cavity 2, passes through the outlet port 8, where it is sealingly engaged in a substantially gas-tight manner by the seal 9, and passes round a pulley-wheel 21. The free end (not shown) of the wire or cable 20 may be connected to part of a safety-belt device, such as the buckle of a safety-belt.

A plurality of balls 22 are provided located in the space surrounding the tapering body portion 13 of the piston 10, adjacent the flange 11.

In normal operation of the pre-tensioner, that is to say when there is not an excessive amount of slack in the safety-belt, the pyrotechnic charge 6 is ignited upon receipt of an appropriate signal from a crash sensor, thus causing gas to flow quickly through the passage 7 and into the cavity 2 of the cylinder 1. This flow of gas into the cavity 2 urges the piston 10 towards the end of the cylinder remote from the housing 5 (i.e. to the right as illustrated in Figure 1). As the piston 10 moves towards the right, so tension is applied to the wire or cable 20, which is drawn into the cylinder 1 through the seal 9, and consequently the seat-belt becomes tensioned. The piston 10 moves in this way until a sufficient tension has been generated within the wire or cable 20, at which stage the piston stops moving. Should a greater tension then be applied to the wire or cable 20, the piston may be caused to move slightly towards the left, but should this happen, the balls 22 will tend to ride up the tapering body portion 13 of the piston 10 and become firmly wedged between the tapering part of the body portion 13 of the piston 10 and the inner side-walls of the cylinder 1, thus preventing further movement of the piston back towards the end of the cylinder 1 adjacent the housing 5.

Should an even greater tension then be applied to the wire or cable 20, the deformable rod or bar 18 will begin to deform, with the turns of the rod or bar 18 un-coiling as part of the rod or bar 18 is drawn by the wire or cable 20 out through the passage 17 in the piston 10. The connector 19 will thus move away from the piston as the deformable rod or bar 18 is gradually un-coiled and withdrawn from the piston with an energy-absorbing effect.

Should the pre-tensioner be actuated when there is a substantial degree of initial slack in the safety-belt, the piston will move towards the right-hand end of the cylinder without significant restraint from tension in the safety belt. As the piston approaches the right-hand end of the cylinder, the spaced apart turns of the rod or bar 18 which project beyond the cylindrical portion 14 of the piston 10, will initially engage the inwardly turned lip 3, and will begin to be compress in the manner of a conventional helical spring, thus absorbing energy. If the compression of the various turns which are initially exposed beyond the end of the cylindrical portion 14 of the piston 10 is not sufficient to terminate movement of the piston, then the end face 23 of the piston 10 will engage the lips 3, and may begin to deform the lips 3, forcing the lips 3 back outwardly effectively to form an extension of the cylindrical cavity 2 of the cylinder 1, thus absorbing even more energy.

It is to be noted that even if the end face 23 of the piston 10 does engage and deform the lips 3, because the turns of the deformable rod or bar 18 are compressed into the cylindrical portion 14 of the piston 10 so as to be accommodated therein, the turns are thereafter protected from further deformation and so maintain their integrity. This ensures that subsequent uncoiling of the turns formed in the deformable rod or bar 18 is not hindered and hence the pre-tensioner can still provide an energy-absorbing effect if substantial tension is, at this stage, applied to the cable 20 to draw the deformable rod or bar 18 through the passage 17 in the piston 10.

In the present Specification "comprises" means "includes or consists of" and "comprising" means "including or consisting of".

## Claims

1. A pre-tensioner for applying tension to part of a safety-belt in the event that an accident should occur, the pre-tensioner comprising: a tube or cylinder (1) defining a cavity (2); a gas supply arrangement to supply gas (5,6,7) to the cavity (2); a piston (10) moveable within the cavity (2) upon supply of gas to the cavity, the piston defining a passage (17) therethrough; there being a deformable rod or bar (18) extending through said passage (17) and having a portion thereof coiled into a plurality of spaced apart turns, one end of the rod or bar (18) being connectable to part of a safety-belt arrangement (19,20); **characterised by**: the turns of the deformable rod or bar extending beyond the end face (23) of the piston (10) to engage an end part (3) of the cylinder (1) and being shaped such that the turns become compressed should the piston move sufficiently towards the end part (3) of the cylinder.

2. A pre-tensioner according to Claim 1, wherein a substantially cylindrical cavity (15) is defined within the piston (10) adjacent the end face (23), the cavity being dimensioned to accommodate the turns of the rod or bar, when fully compressed.

3. A pre-tensioner according to Claim 1 or Claim 2 wherein the end part (3) of the cylinder (1) is deformable and may be deformed, whilst absorbing energy, when contacted by the piston (10).

4. A pre-tensioner according to any preceding claim, wherein a wire or cable (20) is provided to connect the rod or bar (18) to said part of a safety belt arrangement, one end of the wire or cable being connected to one end of said rod or bar within the cavity, the wire or cable extending from the cylinder.

## Patentansprüche

1. Vorspanneinrichtung zum Aufbringen einer Spannung an einen Teil eines Sicherheitsgurts für den Fall, daß ein Unfall auftreten sollte, wobei die Vorspanneinrichtung umfaßt: ein Rohr oder einen Zylinder (1), das oder der einen Hohlraum (2) festlegt; eine Gaszuführungsanordnung zum Zuführen von Gas (5, 6, 7) zu dem Hohlraum (2); einen Kolben (10), der innerhalb des Hohlraums (2) bei der Zufuhr von Gas zu dem Hohlraum bewegbar ist, wobei der Kolben einen Durchgang (17) durch diesen hindurch bildet; wobei eine verformbare Stange oder ein Stab (18) vorhanden ist, die oder der sich durch den genannten Durchgang (17) hindurch erstreckt und einen Abschnitt davon aufweist, der in einer Anzahl von mit gegenseitigem Abstand angeordneten Windungen gewendelt ist, wobei ein Ende der Stange oder des Stabs (18) mit einem Teil einer Sicherheitsgurtanordnung (19, 20) verbunden werden kann, **dadurch gekennzeichnet, daß** sich die Windungen der verformbaren Stange oder des Stabs über die Endfläche (23) des Kolbens (10) hinaus erstrecken, um mit einem Endabschnitt (3) des Zylinders (1) zusammenzuwirken, und so - geformt sind, daß die Windungen zusammengedrückt werden, wenn sich der Kolben ausreichend in Richtung auf den Endabschnitt (3) des Zylinders bewegen sollte.

2. Vorspanneinrichtung nach Anspruch 1, **dadurch gekennzeichnet, daß** ein im wesentlichen zylindrischer Hohlraum (15) innerhalb des Kolbens (10) benachbart zu der Stimfläche (23) gebildet ist, wobei der Hohlraum so dimensioniert ist, daß er die Windungen der Stange oder des Stabs aufnehmen kann, im vollständig zusammengedrückten Zustand.

3. Vorspanneinrichtung nach Anspruch 1 oder 2, **dadurch gekennzeichnet, daß** der Endabschnitt (3) des Zylinders (1) verformbar ist und verformt werden kann, während er Energie absorbiert, wenn der Kolben (10) damit in Kontakt kommt.

4. Vorspanneinrichtung nach einem der vorangehenden Ansprüche, **dadurch gekennzeichnet, daß** ein Draht oder ein Kabel (20) vorgesehen ist, um die Stange oder den Stab (18) mit dem genannten Teil einer Sicherheitsgurtanordnung zu verbinden, wobei ein Ende des Drahts oder Kabels mit einem Ende der genannten Stange oder des Stabs innerhalb des Hohlraums verbunden ist, und wobei sich der Draht oder das Kabel von dem Zylinder erstreckt.

## Revendications

1. Prétensionneur pour appliquer une tension à une partie d'une ceinture de sécurité dans le cas où un accident surviendrait, le prétensionneur comprenant : un tube ou cylindre (1) définissant une cavité (2) ; un agencement d'apport de gaz pour apporter du gaz (5, 6, 7) à la cavité (2) ; un piston (10) mobile dans la cavité (2) à l'apport de gaz dans la cavité, le piston définissant un passage (17) à travers celle-ci ; y ayant une tige ou barre déformable (18) s'étendant à travers ledit passage (17) et ayant une portion de celle-ci enroulée en une pluralité de spires espacées, une extrémité de la tige ou barre (18) étant connectable à une partie d'un agencement de ceinture de sécurité (19, 20) ; **caractérisé par** : les spires de la tige ou barre déformable s'étendant au-delà de la face terminale (23) du piston (10) pour engager une partie terminale (3) du cylindre (1), et étant formées de telle manière que les spires sont compressées si le piston se déplace suffisamment vers la partie terminale (3) du cylindre.

2. Prétensionneur selon la revendication 1, dans lequel une cavité sensiblement cylindrique (15) est définie dans le piston (10) adjacent à la face terminale (23), la cavité étant dimensionnée pour recevoir les spires de la tige ou barre, lorsqu'elles sont totalement compressées.

3. Prétensionneur selon la revendication 1 ou la revendication 2, dans lequel la partie terminale (3) du cylindre (1) est déformable et peut être déformée, tout en absorbant l'énergie, lorsqu'elle est contactée par le piston (10).

4. Prétensionneur selon l'une quelconque des revendications précédentes, dans lequel un fil ou câble (20) est prévu pour connecter la tige ou barre (18) à ladite partie d'un agencement de ceinture de sécurité, une extrémité du fil ou câble, étant connectée à une extrémité de ladite tige ou barre dans la cavité, le fil ou câble s'étendant à partir du cylindre.
